# EUROPÄISCHE PATENTANMELDUNG

(11) **EP 2 341 503 A1**
(43) Veröffentlichungstag der Anmeldung: **06.07.2011**
(21) Anmeldenummer: 09306297.4
(22) Anmeldetag: 21.12.2009
(51) Int. Cl.: G11B 23/00

(54) **Plattenförmiges Speichermedium und Klemmhalter für das Speichermedium**

(71) Anmelder: Thomson Licensing, 92130 Issy-les-Moulineaux (FR)
(72) Erfinder: Knappmann, Stephan, 78658 Zimmern ob Rottweil (DE); Moessner, Juergen, 78086 Brigachtal (DE)
(74) Vertreter: Schmidt-Uhlig, Thomas

(57) **Zusammenfassung**

Die vorliegende Erfindung betrifft ein plattenförmiges Speichermedium (1) und einen Klemmhalter (20) für ein solches plattenförmiges Speichermedium (1). Das Speichermedium (1) hat ein Innenloch (9) und eine Auflagefläche (8), wobei die Auflagefläche (8) drei Auflagepunkte (2) aufweist. Ein Klemmhalter (20) für das Speichermedium (1) hat eine Auflage (6) und einen Niederhalter (5), wobei die Auflage (6) und der Niederhalter (5) entsprechend der Auflagepunkte (2) abgestuft sind.

## Beschreibung

Die vorliegende Erfindung betrifft ein plattenförmiges Speichermedium und einen Klemmhalter für ein solches plattenförmiges Speichermedium. Die Erfindung betrifft zudem ein Laufwerk für wechselbare plattenförmige Speichermedien, das einen solchen Klemmhalter aufweist.

Heutzutage sind eine Vielzahl wechselbarer plattenförmiger Speichermedien bekannt. Hauptsächlich handelt es sich dabei um optische Speichermedien wie zum Beispiel die CD (Compact Disk), die DVD (Digital Versatile Disk) oder die BD (BluRay Disk) in ihren verschiedenen Ausführungen. Es sind aber auch magnetische (Diskette) oder magneto-optische (MOD, Magneto Optical Disk) plattenförmige Speichermedien bekannt. Laufwerke für derartige Speichermedien weisen in der Regel einen Plattenteller auf, der das im Laufwerk befindliche Speichermedium auf seiner Auflagefläche trägt sowie mit einem Klemmhalter räumlich fixiert. Der Plattenteller wird zum Lesen und/oder Beschreiben des Speichermediums mit Hilfe eines Motors in eine Drehbewegung versetzt und ist entweder direkt auf der Motorwelle oder aber auf einer eigenen Antriebswelle montiert. Im letzteren Fall erfolgt der Antrieb des Plattentellers über ein entsprechendes Getriebe.

Üblicherweise weisen optische Speichermedien ein gestanztes Innenloch mit einem Durchmesser von 15mm auf. An diesem Innenloch werden sie über einen gefederten Konus oder mit Hilfe von drei Zentrierelementen, beispielsweise Kunststofffedern oder gefederten Kugeln, zentriert. Ein ringförmiger, definierter Bereich des optischen Speichermediums liegt flächig auf der Auflagefläche des Plattentellers auf und wird entweder von einem Gegenstück niedergehalten oder über drei Federn oder drei gefederte Kugeln fixiert.

Die flächige Auflage bzw. Klemmung kann zu einer Verformung des Speichermediums führen, wenn das Speichermedium im Auflagebereich nicht komplett eben ist. Eine flächige Klemmung hat dann eine Verformung des Speichermediums im Klemmbereich zur Folge, die ebenfalls zu einer Verformung des gesamten Speichermediums einschließlich des Datenbereichs führen kann. Eine gewisse Begrenzung der Verformung wird erzielt, indem dünne gummiartige Auflagen verwendet werden. Dadurch kann eine Verformung des Speichermediums allerdings nicht vollständig ausgeschlossen werden, da die Auflagen wegen der exakten Positionierung des Speichermediums nicht zu weich gestaltet werden können. Ein Hauptgrund für diese Auflagen ist zudem auch eine sichere Mitnahme des geklemmten Speichermediums durch den Motor.

In diesem Zusammenhang offenbart US 3,870,321 einen Halter für optischen Speichermedium, der auf einen Niederhalter bzw. ein Gegenstück zur Auflage verzichtet. Zu diesem Zweck wird eine Dreipunktauflage verwendet. Das optische Speichermedium wird allein durch sein Eigengewicht auf der Auflage gehalten. Die Mitnahme des optischen Speichermediums durch den Motor wird gewährleistet, indem einer der Auflagepunkte in eine Einkerbung des optischen Speichermediums greift. Das optische Speichermedium muss exakt zur Dreipunktauflage positioniert werden, damit der Auflagepunkt in die Einkerbung greifen kann. Ein Laufwerk mit diesem System kann nur in waagrechter Position betrieben werden. Es ist zudem nicht kompatibel mit bestehenden optischen Speichermedien und nicht für hohe Drehgeschwindigkeiten geeignet.

Es ist eine Aufgabe der Erfindung, ein Speichermedium vorzuschlagen, bei dem die durch einen Klemmhalter hervorgerufenen Verformungen reduziert sind.

Erfindungsgemäß wird diese Aufgabe gelöst durch ein plattenförmiges Speichermedium mit einem Innenloch und einer Auflagefläche, wobei die Auflagefläche drei Auflagepunkte aufweist.

Erfindungsgemäß wird die flächige Auflage des Speichermediums auf eine Dreipunktauflage reduziert. Dadurch wird eine Verformung des Speichermediums durch den Haltemechanismus minimiert. Die Dreipunktauflage wird im wesentlichen in das Speichermedium integriert. Speichermedien mit einteiligen Substraten, wie beispielsweise die CD oder die BD, können ohne größeren Aufwand mit exakt sich gegenüber stehenden Dreipunktauflagen hergestellt werden. Im Gegensatz dazu muss bei Speichermedien mit zusammengeklebten Halbscheiben, wie beispielsweise der DVD, während des Zusammenklebens sicher gestellt werden, dass sich die jeweiligen Dreipunktauflagen exakt gegenüber stehen. Durch die Reduzierung der Verformung können die Eigenschaften von bezüglich der Ebenheit optimierten optischen Speichermedien der 4. Generation optischer Speicher besser genutzt werden, insbesondere in Systemen, die sensibel auf eine Verkippung des optischen Speichermediums reagieren.

Im einfachsten Fall sind die Auflagepunkte durch Erhöhungen der Auflagefläche gebildet. Ein derart gestaltetes Speichermedium weist zwar durch die Auflagepunkte eine etwas größere Dicke als konventionelle Speichermedien auf, ist aber kompatibel zu den meisten bestehenden Haltesystemen. Es ist daher keine Modifizierung der Haltesysteme erforderlich.

Gemäß einer weiteren Lösung ist die Auflagefläche vertieft, wobei die Auflagepunkte durch nicht vertiefte Bereiche der Auflagefläche gebildet sind. Alternativ dazu sind die Auflagepunkte durch Stege gebildet, die aus nierenförmigen Aussparungen der Auflagefläche resultieren. Zur besseren Stabilität der Stege sind diese vorzugsweise durch einen Innenring verbunden. In beiden Fällen hat das Speichermedium die gleiche Dicke wie konventionelle Speichermedien, wodurch die Kompatibilität zu den bestehenden Haltesystemen weiter verbessert wird.

Die erfindungsgemäßen Speichermedien lassen sich einfach mit Hilfe von Spritzgussverfahren herstellen. Ein weiterer Vorteil besteht darin, dass durch die Integration der Dreipunktauflage in das Speichermedium keine exakte Positionierung des Speichermediums relativ zur Auflage und dem Niederhalter erforderlich ist.

Vorteilhafterweise weist das Speichermedium einen Schutzring auf, der die Auflagepunkte vor Abrieb und Verformung beim Umgang mit dem Speichermedium außerhalb eines Laufwerkes schützt. Zu diesem Zweck hat der Schutzring vorzugsweise eine größere Höhe als die Auflagepunkte.

Es ist eine weitere Aufgabe der Erfindung, einen Klemmhalter für ein Laufwerk für wechselbare plattenförmige Speichermedien vorzuschlagen, der an das erfindungsgemäße Speichermedium angepasst ist.

Erfindungsgemäß wird diese Aufgabe gelöst durch einen Klemmhalter für ein erfindungsgemäßen plattenförmiges Speichermedium, mit einer Auflage und einem Niederhalter, bei dem die Auflage und der Niederhalter entsprechend der Auflagepunkte des Speichermediums abgestuft sind. Ein vertiefter Bereich dient dabei zur Aufnahme der Auflagepunkte. Der vertiefte Bereich ist derart gebildet, dass sich sowohl der Niederhalter als auch die Auflage nur über die Auflagepunkte im Kontakt mit dem Speichermedium befinden. Auf diese Weise werden mögliche Verformungen des Speichermediums verhindert. Der nicht vertiefte Bereich dient zur Klemmung von konventionellen Speichermedien.

Vorzugsweise ist ein innerer Bereich der Auflage und des Niederhalters zur Aufnahme der Auflagepunkte vertieft. Ein Vorteil der Verlegung der Dreipunktauflage und damit der Klemmung des Speichermediums hin zu kleineren Durchmessern ist die Reduzierung des in das Speichermedium eingebrachten Klemmmomentes.

Alternativ ist ein äußerer Bereich der Auflage und des Niederhalters zur Aufnahme der Auflagepunkte vertieft. Der größere Haltedurchmesser für das erfindungsgemäße Speichermedium bewirkt eine erhöhte Stabilität der Halterung des Speichermediums.

Vorteilhafterweise weist der Klemmhalter einen geteilten Zentrierkonus mit einem inneren Konus und einem äußeren Konus auf. Der äußere Konus dient dabei zugleich als Auflage für ein konventionelles Speichermedium. Auf diese Weise kann der Zentrierkonus sowohl für konventionelle Speichermedien als auch für Speichermedien gemäß der Erfindung optimiert werden.

Gemäß einem Aspekt der Erfindung ist der geteilte Zentrierkonus gefedert gelagert, wobei der Klemmhalter vorzugsweise mit einem unteren Anschlag und/oder einem oberen Anschlag für den geteilten Zentrierkonus versehen ist. Ein unterer Anschlag des äußeren Konus gewährleistet eine definierte Auflagehöhe für konventionelle Speichermedien. Ein oberer Anschlag sorgt dafür, dass der geteilte Zentrierkonus sicher gehalten wird.

Alle vorgeschlagenen Varianten des Klemmhalters minimieren den Hebelarm zwischen der Konuszentrierung am Innenloch und Auflagefläche des Speichermediums. Gleichzeitig sind die vorgeschlagenen Klemmhalter kompatibel zu den bestehenden Formaten der Speichermedien (z.B. CD/DVD/BD).

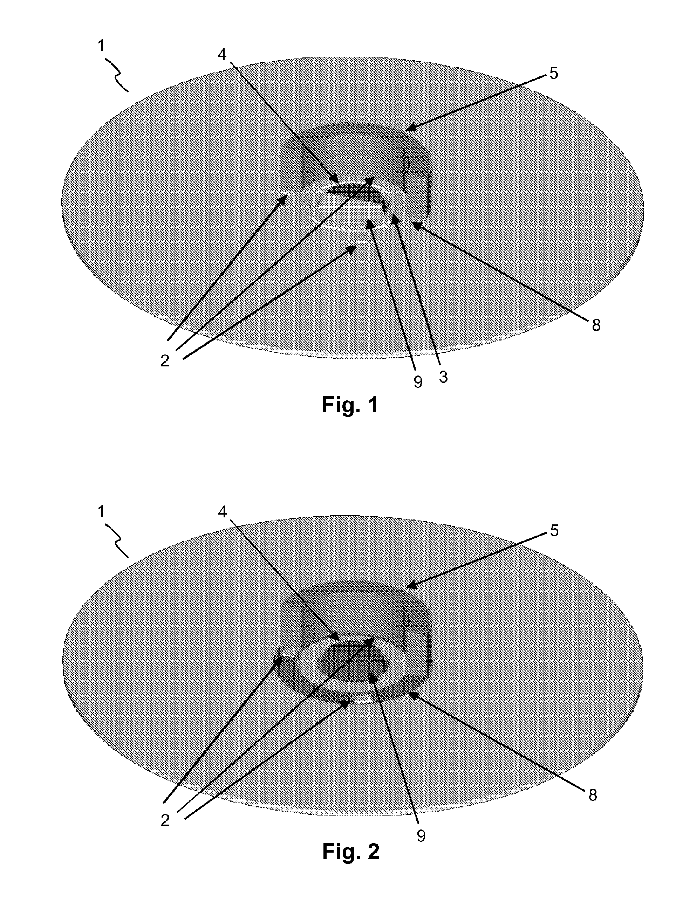

Zum besseren Verständnis soll die Erfindung nachfolgend anhand der Figuren 1 bis 7 erläutert werden. Gleiche Bezugszeichen bezeichnen dabei gleiche Elemente. Selbstverständlich ist die Erfindung nicht auf die dargestellten Ausführungsbeispiele beschränkt. Weitere Ausführungen ergeben sich für den Fachmann in naheliegender Weise, ohne den Bereich der Erfindung zu verlassen, wie er in den Ansprüchen definiert ist. Es zeigen:
- Fig. 1:: ein erstes Ausführungsbeispiel eines erfindungsgemäßen Speichermediums;
- Fig. 2:: ein zweites Ausführungsbeispiel eines erfindungsgemäßen Speichermediums;
- Fig. 3:: ein drittes Ausführungsbeispiel eines erfindungsgemäßen Speichermediums;
- Fig. 4:: ein erstes Ausführungsbeispiel eines erfindungsgemäßen kompatiblen Klemmhalters bei Verwendung eines erfindungsgemäßen Speichermediums;
- Fig. 5:: den Klemmhalter der Fig. 4 bei Verwendung eines bekannten Speichermediums;
- Fig. 6:: ein zweites Ausführungsbeispiel eines erfindungsgemäßen kompatiblen Klemmhalters bei Verwendung des Speichermediums der Fig. 1 mit vergrößertem Innenloch; und
- Fig. 7:: den Klemmhalter der Fig. 6 bei Verwendung eines bekannten Speichermediums.

Fig. 1 zeigt ein erstes Ausführungsbeispiel eines erfindungsgemäßen Speichermediums 1. Das Speichermedium 1 besitzt auf beiden Seiten eine Dreipunktauflage, die durch jeweils drei erhöhte Auflagepunkte 2 innerhalb einer Auflagefläche 8 gebildet wird. Im Zentrum weist das Speichermedium 1 ein Innenloch 9 mit einem Durchmesser von beispielsweise 15mm auf. Ein Schutzring 3 schützt die mit hoher Genauigkeit hergestellten erhöhten Auflagepunkte 2 vor Abrieb und Verformung beim Umgang mit dem Speichermedium 1 außerhalb eines Laufwerkes. Innerhalb eines Laufwerks wird das Speichermedium durch einen Konus 4 zentriert, der in das Innenloch 9 greift, und durch einen Niederhalter 5 gehalten. Sowohl der Niederhalter 5 als auch die in der Figur nicht dargestellte Auflage befinden sich nur über die Auflagepunkte 2 im Kontakt mit dem Speichermedium 1. Das dargestellte Speichermedium 1 ist kompatibel zu bestehenden Systemen. Allerdings ist die Dicke des Speichermediums 1 durch die Auflagepunkte 2 etwas größer als bei bekannten Speichermedien. Vorzugsweise hat der Schutzring 3 einen Radius, der kleiner als der Innenradius der Auflagefläche 8 ist. Die Höhe des Schutzrings 3 ist vorteilhafterweise größer als oder zumindest gleich der Höhe der Auflagepunkte 2. Ähnliche Ringe sind als Stapelringe von CDs und DVDs bekannt. Dort haben sie allerdings einen Radius größer des Außenradius der Auflagefläche und dienen zum vereinfachten Trennen der Speichermedien, wenn mehrere Speichermedien gestapelt sind.

Ein zweites Ausführungsbeispiel eines erfindungsgemäßen Speichermediums 1 ist in Fig. 2 dargestellt. Bei diesem Speichermedium ist die Auflagefläche 8 vertieft ausgebildet, wobei drei Auflagepunkte 2 nicht vertieft sind. Auch dieses Speichermedium 1 ist kompatibel zu bestehenden Systemen, wobei zusätzlich die Dicke des Speichermediums 1 gleich der Dicke bekannter Speichermedien ist.

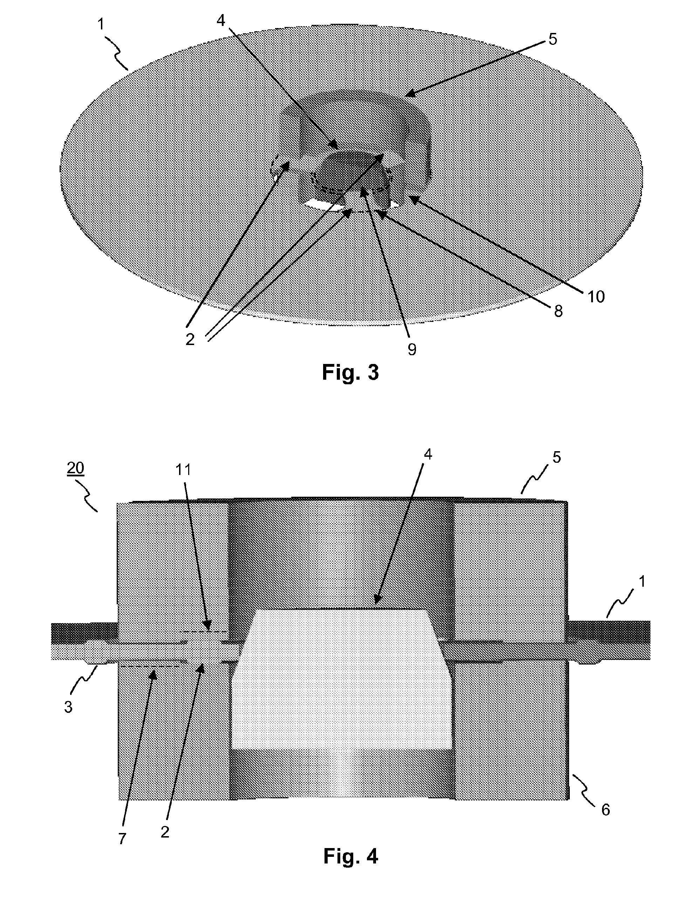

Ein alternatives Ausführungsbeispiel eines erfindungsgemäßen Speichermediums 1, bei dem die Dicke unverändert ist, zeigt Fig. 3. In diesem Beispiel werden die Auflagepunkte 2 durch Stege 2 gebildet, die aus nierenförmigen Aussparungen 10 der Auflagefläche 8 resultieren. Optional sind die Stege 2 durch einen geschlossenen Innenring (in Fig. 3 gestrichelt angedeutet) miteinander verbunden. Der Innendurchmesser des Innenrings beträgt vorzugsweise 15mm.

Fig. 4 zeigt ein erstes Ausführungsbeispiel eines erfindungsgemäßen kompatiblen Klemmhalters 20 bei Verwendung eines erfindungsgemäßen Speichermediums 1. Das Speichermedium ist ähnlich dem in der Fig. 1 gezeigten Speichermedium, allerdings liegt der Schutzring 3 hier außerhalb des Klemmhalters 20. In diesem Ausführungsbeispiel werden eine abgestufte Auflage 6 und ein abgestufter Niederhalter 5 verwendet. In einem inneren Bereich 11 bis zu einem Durchmesser von beispielsweise 23.5mm weisen die Auflage 6 und der Niederhalter 5 eine ringförmige Vertiefung auf, innerhalb derer sich die Auflagepunkte 2 des Speichermediums 1 befinden. Die Tiefe der Vertiefung ist derart gewählt, dass sich sowohl die Auflage 6 als auch der Niederhalter 5 nur über die Auflagepunkte 2 im Kontakt mit dem Speichermedium 1 befinden. Anstelle einer ringförmigen Vertiefung können auch drei getrennte vertiefte Flächen verwendet werden, die entsprechend der Auflagepunkte 2 angeordnet sind.

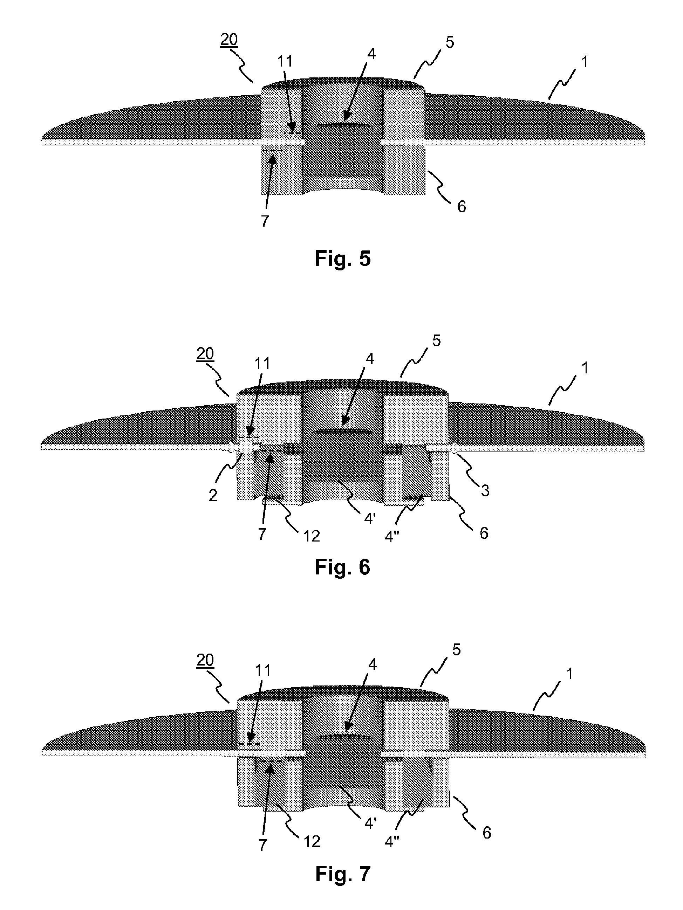

Ein weiterer Bereich 7 der Auflage 6 und des Niederhalter 5 bis zu einem Durchmesser von beispielsweise 32,5mm wird für das Halten von bekannten Speichermedien 1 verwendet. Dies ist in Fig. 5 dargestellt. Selbstverständlich kann die Position des vertieften Bereichs 11 und des nicht vertieften Bereichs 7 auch vertauscht werden. In diesem Fall müssen die Auflagepunkte 2 weiter außen auf dem Speichermedium 1 liegen.

Der Klemmhalter 20 kann sowohl Speichermedien 1 der bisherigen Standards(z.B. CD/DVD/BD) aufnehmen, als auch Speichermedien 1 mit der vorgeschlagenen Dreipunktauflage. Ein Vorteil der Verlegung der Dreipunktauflage und damit der Klemmung des Speichermediums 1 hin zu kleineren Durchmessern unterhalb des üblichen Klemmbereichs bekannter Speichermedien 1 von 23,5mm bis 32,5mm ist die Reduzierung des in das Speichermedium 1 eingebrachten Drehmomentes. Dadurch werden auch die erzeugten Spannungen reduziert, die eine Verformung des Speichermediums 1 hervorrufen können. Durch die Konuszentrierung des Speichermediums 1 von unten wird eine Kraft auf den Innendurchmesser des Speichermediums aufgebracht. Wenn der Hebelarm in radialer Richtung, der sich durch den Niederhalter 5 von oben ergibt, minimiert wird, minimiert sich gleichzeitig das auf das Speichermedium 1 wirkende Drehmoment, das aus der Zentrierkraft von unten und der Niederhaltekraft von oben resultiert.

Fig. 6 zeigt ein zweites Ausführungsbeispiel eines erfindungsgemäßen kompatiblen Klemmhalters 10 bei Verwendung des Speichermediums 1 der Fig. 1 mit einem vergrößerten Innenloch 9. Der Durchmesser des Innenlochs 9 beträgt beispielsweise 35.5mm. In diesem Ausführungsbeispiel liegen die Auflagepunkte 2 außerhalb des üblichen Klemmbereichs von 23,5mm bis 32,5mm. In diesem Fall weist der Zentrierkonus 4 einen inneren Konus 4' und einen äußeren Konus 4" auf, wobei letzterer gleichzeitig als Auflage für bekannte Speichermedien 1 dient. Der Zentrierkonus 4 ist gefedert gelagert und mit einem oberen Anschlag versehen. Die Federung und der obere Anschlag sind in Fig. 6 nicht dargestellt. Ein unterer Anschlag 12 des äußeren Konus 4" gewährleistet eine definierte Auflagenhöhe für konventionelle Speichermedien 1. Der äußere Konus 4" ist in Verbindung mit dem Innendurchmesser des erfindungsgemäßen Speichermediums 1 derart gestaltet, dass der äußere Konus 4" nicht über das Speichermedium 1 nach oben übersteht. Somit kommt es nicht zu einer Berührung des äußeren Konus 4" mit dem Niederhalter 5, was den Verlust der Zentrierung zur Folge hätte. Ein äußerer Bereich 11 der Auflage 6 und des Niederhalters 5 ist vertieft ausgebildet und nimmt die Auflagepunkte 2 des Speichermediums 1 auf. Der äußere Bereich 11 erstreckt sich beispielsweise von 35.5mm bis 42mm. Zentriert wird das Speichermedium 1 durch den äußeren Konus 4".

Im Falle eines konventionelle Speichermediums 1 wird der innere Konus 4' zum Zentrieren des Speichermediums 1 verwendet. Die durch den äußeren Konus 4" gebildete Auflage und der Niederhalter 5 werden zur Klemmung des Speichermediums 1 verwendet. Dies ist in Fig. 7 dargestellt.

Ein Vorteil der Dreipunktklemmung außerhalb des üblichen Klemmbereichs von 23,5mm bis 32,5mm besteht in der dadurch erreichten größeren Stabilität des Speichermediums 1. Allerdings wird als Konsequenz im inneren Bereich des Speichermediums 1 etwas an Speicherbereich eingebüßt.

## Patentansprüche

1. Plattenförmiges Speichermedium (1) mit einem Innenloch (9) und einer Auflagefläche (8), **dadurch gekennzeichnet, dass** die Auflagefläche (8) drei Auflagepunkte (2) aufweist.

2. Plattenförmiges Speichermedium (1) nach Anspruch 1, **wobei** die Auflagepunkte (2) durch Erhöhungen der Auflagefläche (8) gebildet sind.

3. Plattenförmiges Speichermedium (1) nach Anspruch 1, **wobei** die Auflagefläche (8) vertieft ist und die Auflagepunkte (2) durch nicht vertiefte Bereiche der Auflagefläche (8) gebildet sind.

4. Plattenförmiges Speichermedium (1) nach Anspruch 1, **wobei** die Auflagepunkte (2) durch Stege (2) gebildet sind, die durch nierenförmige Aussparungen (10) der Auflagefläche (8) geformt sind.

5. Plattenförmiges Speichermedium (1) nach Anspruch 4, **wobei** die Stege (2) durch einen Innenring verbunden sind.

6. Plattenförmiges Speichermedium (1) nach einem der Ansprüche 1 bis 5, **wobei** das Speichermedium (1) einen Schutzring (3) zum Schutz der Auflagepunkte (2) aufweist.

7. Klemmhalter (20) für ein plattenförmiges Speichermedium (1) nach einem der Ansprüche 1 bis 5, mit einer Auflage (6) und einem Niederhalter (5), **dadurch gekennzeichnet, dass** die Auflage (6) und der Niederhalter (5) abgestuft sind.

8. Klemmhalter (20) nach Anspruch 7, **wobei** ein innerer Bereich (11) der Auflage (6) und des Niederhalters (5) zur Aufnahme der Auflagepunkte (2) vertieft ist.

9. Klemmhalter (20) nach Anspruch 7, **wobei** ein äußerer Bereich (11) der Auflage (6) und des Niederhalters (5) zur Aufnahme der Auflagepunkte (2) vertieft ist.

10. Klemmhalter (20) nach Anspruch 9, **wobei** der Klemmhalter (20) einen geteilten Zentrierkonus (4) mit einem inneren Konus (4') und einem äußeren Konus (4") aufweist.

11. Klemmhalter (20) nach Anspruch 10, **wobei** der äußere Konus (4") als Auflage für ein konventionelles Speichermedium (1) dient.

12. Klemmhalter (20) nach Anspruch 10 oder 11, **wobei** der geteilte Zentrierkonus (4) gefedert gelagert ist.

13. Klemmhalter (20) nach Anspruch 12, **wobei** der Klemmhalter (20) einen unteren Anschlag (12) und/oder einen oberen Anschlag für den geteilten Zentrierkonus (4) aufweist.

14. Laufwerk für plattenförmige Speichermedien (1), **dadurch gekennzeichnet, dass** es einen Klemmhalter (20) nach einem der Ansprüche 7 bis 13 aufweist.
